# EUROPEAN PATENT APPLICATION

(11) **EP 4 625 028 A1**
(43) Date of publication of application: **01.10.2025**
(21) Application number: 25153682.7
(22) Date of filing: 23.01.2025
(51) Int. Cl.: G02F 1/03, G02F 1/035, G02F 1/21, G02F 1/225

(54) **OPTICAL MODULATOR**

(30) Priority: 28.03.2024 JP 2024054507
(71) Applicant: Sumitomo Osaka Cement Co., Ltd., Tokyo, 105-8641 (JP); National Institute of Information and Communications Technology, Koganei-shi, Tokyo 184-8795 (JP)
(72) Inventor: KATAOKA, Yu, Tokyo, 105-8641 (JP); TAKANO, Shingo, Tokyo, 105-8641 (JP); YAMAGUCHI, Yuya, Tokyo, 184-8795 (JP); AKAHANE, Kouichi, Tokyo, 184-8795 (JP)
(74) Representative: Sonnenberg Harrison Partnerschaft mbB

(57) **Abstract**

An optical waveguide device in which two modulation electrodes (E1, E2) are provided to apply a differential modulation signal to each of two branched waveguides 10 configuring the Mach-Zehnder type optical waveguide, wherein each of the modulation electrodes includes a plurality of proximity electrodes (PE11 to PE22) disposed in a divided manner along the branched waveguide, a signal electrode (LE1, LE2) for propagating the modulation signal, and a bypass electrode (BE1, BE2) connecting the proximity electrodes and the signal electrode, a ground electrode (G1, G2) is disposed to sandwich the two modulation electrodes (E1, E2), and a capacitance adjustment mechanisms LET11 and LET12 for adjusting a phase velocity of the modulation signal propagating through the modulation electrode is provided between the modulation electrode E1 and the ground electrode G1 which are adjacent to each other.

## Description

This application claims priority of Japanese application JP 2024-054507 filed on 28 March 2024. The entire disclosure of JP 2024-054507 is hereby incorporated herein by reference.

### BACKGROUND OF THE INVENTION

### Field of the Invention

The present invention relates to an optical waveguide device, an optical modulation device using the same, and an optical transmission apparatus, particularly to an optical waveguide device in which an optical waveguide including at least one Mach-Zehnder type optical waveguide is formed on a substrate, and two modulation electrodes are provided to apply a differential modulation signal to each of two branched waveguides configuring the Mach-Zehnder type optical waveguide.

### Description of Related Art

In the field of optical communication and in the field of optical measurement, an optical waveguide device such as an optical modulator including an optical waveguide formed on a substrate has been widely used. In recent years, an optical modulator included in a transmitter built into an optical transmission/reception device is required to be miniaturized, to have low power consumption, and to have a broadband of a driving signal or a low drive voltage. In order to cope with miniaturization and the broadband of the driving signal, a thin plate having a thickness of several µm or less is used for the substrate on which the optical waveguide is formed. Further, in order to reduce the drive voltage, the optical waveguide device is driven by differential modulation signals.

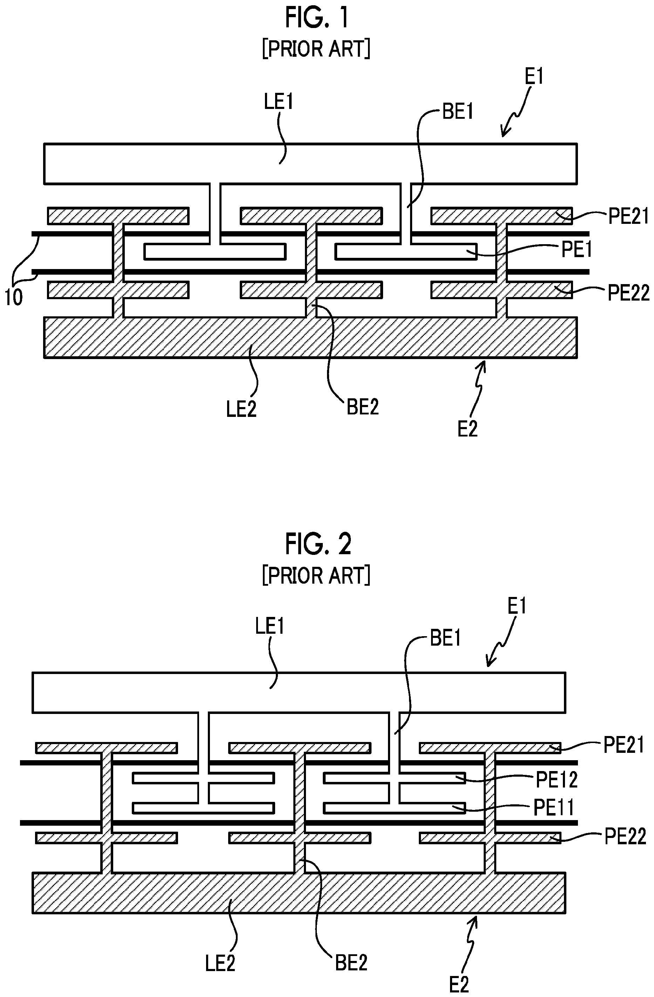

Chinese Laid-open Patent Publication No. CN115586663A discloses an optical waveguide device that uses such a thin plate and is driven by a differential modulation signal. FIGS. 1 and 2 are plan views showing a part of the optical waveguide device disclosed in Chinese Laid-open Patent Publication No. CN115586663A. In FIG. 1, the optical waveguide 10 is two branched waveguides configuring a Mach-Zehnder type optical waveguide, and each branched waveguide 10 is driven in a push-pull manner by the electrodes E1 and E2 to which a differential modulation signal is applied. The electrodes E1 and E2 are configured such that a plurality of "T"- or "H"-shaped fine electrodes (segment electrodes) are connected to strip-shaped signal electrodes LE1 and LE2 through which a modulation signal propagates.

In addition, as shown in FIG. 2, a configuration is also proposed in which "H"-shaped segment electrodes are connected to both signal electrodes LE1 and LE2. Each segment electrode is disposed close to the optical waveguide (branched waveguide) 10 and is composed of proximity electrodes (PE1 to PE22) for applying an electric field to the optical waveguide, and a bypass electrode (BE1 or BE2) that connects the proximity electrodes and the signal electrode (LE1 or LE2).

A differential modulation signal propagates to the electrodes E1 and E2. Therefore, it is necessary to always apply modulation signals with reverse phases to the proximity electrodes (for example, PE1 and PE21, or PE1 and PE22) in the same optical waveguide 10. However, since the segment electrodes connected to the electrodes E1 and E2 do not necessarily have the same shape, a phenomenon occurs in which the phases of the differential modulation signals propagating through the electrodes E1 and E2 gradually shift.

In FIG. 1, the shapes of the segment electrodes are different, being a "T" shape and an "H" shape, whereas in FIG. 2, each segment electrode has the same "H" shape, but the clearances between proximity electrodes (PE11 and PE12, PE21 and PE22) are different from each other, which results in a difference in the propagation velocity of the differential modulation signal and a phase shift in the modulation signal.

### Related art Document

### Patent Document

[Patent Document 1] Chinese Patent Publication CN115586663A

### SUMMARY OF THE INVENTION

An object to be solved by the present invention is to solve the above problem and to provide an optical waveguide device that suppresses the phase shift of a differential modulation signal propagating through the electrodes. Furthermore, an optical modulation device and an optical transmission apparatus using the optical waveguide device are provided.

In order to address the object, an optical waveguide device, an optical modulation device, and an optical transmission apparatus of the present invention have the following technical features.
(1) An optical waveguide device in which an optical waveguide including at least one Mach-Zehnder type optical waveguide is formed on a substrate, and two modulation electrodes are provided to apply a differential modulation signal to each of two branched waveguides configuring the Mach-Zehnder type optical waveguide, in which each of the modulation electrodes includes a plurality of proximity electrodes disposed in a divided manner along the branched waveguide, a signal electrode for propagating the modulation signal, and a bypass electrode connecting the proximity electrodes and the signal electrode, a ground electrode is disposed to sandwich the two modulation electrodes, and a capacitance adjustment mechanism for adjusting a phase velocity of the modulation signal propagating through the modulation electrode is provided between the modulation electrode and the ground electrode which are adjacent to each other.
(2) The optical waveguide device according to (1), in which the capacitance adjustment mechanism may be a dummy electrode that is formed on a part of the modulation electrode or the ground electrode and does not generate an electric field to be applied to the branched waveguide.
(3) The optical waveguide device according to (2), in which the dummy electrode may include a first dummy electrode provided on the modulation electrode and a second dummy electrode provided on the ground electrode, and a distance from the signal electrode to a portion of the first dummy electrode that is farthest from the signal electrode may be shorter than a distance from the signal electrode to a portion of the second dummy electrode that is closest to the signal electrode.
(4) The optical waveguide device according to (2), in which the dummy electrode may include a first dummy electrode provided on the modulation electrode and a second dummy electrode provided on the ground electrode, and a distance from the signal electrode to a portion of the first dummy electrode that is farthest from the signal electrode may be shorter than a distance from the signal electrode to a portion of the second dummy electrode that is closest to the signal electrode.
(5) The optical waveguide device according to (2), wherein the dummy electrode may be a first dummy electrode provided on the modulation electrode, and the ground electrode may have a shape surrounding a part of the first dummy electrode.
(6) The optical waveguide device according to claim 2, in which a length λ1 of the dummy electrode along the signal electrode and a clearance λ0 between adjacent bypass electrodes may be different from each other.
(7) The optical waveguide device according to (1), in which the capacitance adjustment mechanism may have a configuration for adjusting the clearance between the modulation electrode and the ground electrode which are adjacent to each other.
(8) The optical waveguide device according to (1), in which a buffer layer may be formed on the substrate, the proximity electrode may be disposed between the substrate and the buffer layer, and the signal electrode and a part of the bypass electrode may be disposed on the buffer layer.
(9) The optical waveguide device according to (1), in which a dummy optical waveguide that does not propagate a light wave may be disposed between the modulation electrode and the ground electrode which are adjacent to each other.
(10) The optical waveguide device according to (1), wherein a capacitor that blocks a DC component of the modulation signal may be formed in a part of the modulation electrode or in a part of a signal line electrically connected to the modulation electrode.
(11) An optical modulation device including: the optical waveguide device according to any one of (1) to (10) being accommodated in a case; and an optical fiber through which a light wave is input into the optical waveguide or output from the optical waveguide.
(12) The optical modulation device according to (11), in which the optical waveguide device may include a modulation electrode for modulating the light wave propagating through the optical waveguide, and an electronic circuit that amplifies a modulation signal to be input to the modulation electrode of the optical waveguide device may be provided inside the case.
(13) An optical transmission apparatus including: the optical modulation device according to (11) or (12), and an electronic circuit that outputs a modulation signal causing the optical modulation device to perform a modulation operation.

The present invention is an optical waveguide device in which an optical waveguide including at least one Mach-Zehnder type optical waveguide is formed on a substrate, and two modulation electrodes are provided to apply a differential modulation signal to each of two branched waveguides configuring the Mach-Zehnder type optical waveguide, wherein each of the modulation electrodes includes a plurality of proximity electrodes disposed in a divided manner along the branched waveguide, a signal electrode for propagating the modulation signal, and a bypass electrode connecting the proximity electrodes and the signal electrode, and a ground electrode is disposed to sandwich the two modulation electrodes, and a capacitance adjustment mechanism for adjusting a phase velocity of the modulation signal propagating through the modulation electrode is provided between the modulation electrode and the ground electrode which are adjacent to each other, so that a phase shift of the differential modulation signal propagating through the electrode is suppressed. In addition, the optical modulation device and the optical transmission apparatus having the same excellent characteristics can be provided using the optical waveguide device.

### BRIEF DESCRIPTION OF THE DRAWINGS

FIG. 1 is a plan view showing an example of an optical waveguide device disclosed in Chinese Laid-open Patent Publication No. CN115586663A.
FIG. 2 is a plan view showing another example of the optical waveguide device disclosed in Chinese Laid-open Patent Publication No. CN115586663A.
FIG. 3 is a plan view illustrating an example of an optical waveguide device using a segment electrode.
FIGS. 4A to 4C are views showing an example of cross-sectional views taken along dotted lines A to C in FIG. 3.
FIGS. 5A to 5C are views showing another example of the cross-sectional views taken along the dotted lines A to C in FIG. 3.
FIG. 6 is a plan view illustrating a first embodiment of the optical waveguide device according to the present invention.
FIG. 7 is a plan view illustrating a second embodiment of the optical waveguide device according to the present invention.
FIG. 8 is a diagram illustrating an example of adjusting the clearance between the modulation electrode and the ground electrode.
FIG. 9 is a diagram illustrating an example in which the clearance between the modulation electrode and the ground electrode is changed.
FIG. 10 is a diagram illustrating a "T"-shaped dummy electrode provided on the ground electrode.
FIG. 11 is a diagram illustrating the relationship between the length λ1 of the dummy electrode provided on the ground electrode and the clearance λ0 of a bypass electrode.
FIG. 12 is a diagram illustrating an example in which a first dummy electrode provided on the modulation electrode and a second dummy electrode provided on the ground electrode are disposed to face each other.
FIG. 13 is a diagram illustrating an example in which "T"-shaped dummy electrodes provided on both the modulation electrode and the ground electrode are intertwined and disposed.
FIG. 14 is a diagram illustrating an example in which substantially "H"-shaped dummy electrodes provided on both the modulation electrode and the ground electrode are intertwined and disposed.
FIG. 15 is a diagram illustrating an example in which "L"-shaped dummy electrodes provided on both the modulation electrode and the ground electrode are intertwined and disposed.
FIG. 16 is a diagram illustrating an example in which the shape of the ground electrode is configured to surround a part of the dummy electrode of the modulation electrode.
FIG. 17 is a plan view illustrating a configuration in which the symmetry between two modulation electrodes (E1 and E2) and the ground electrode is increased in the optical waveguide device according to the present invention.
FIG. 18 is a diagram illustrating an application example of the optical waveguide device shown in FIG. 17.
FIG. 19 is a plan view illustrating an example in which a dummy optical waveguide is used in the optical waveguide device of the present invention.
FIG. 20 is a plan view illustrating an example in which dummy electrodes provided on both the modulation electrode and the ground electrode are disposed to be spaced apart in the thickness direction of a substrate.
FIG. 21 is a diagram showing an example of a cross-sectional view taken along dotted line A in FIG. 20.
FIG. 22 is a diagram showing an optical transmission apparatus according to the present invention.
FIG. 23 is a diagram illustrating an example in which a capacitor is disposed on a part of a modulation electrode of the optical waveguide device.
FIG. 24 is a diagram illustrating an example in which a capacitor is disposed on a signal line connected to a modulation electrode of the optical waveguide device.

### DETAILED DESCRIPTION OF THE INVENTION

Hereinafter, the present invention will be described in detail using preferred examples.

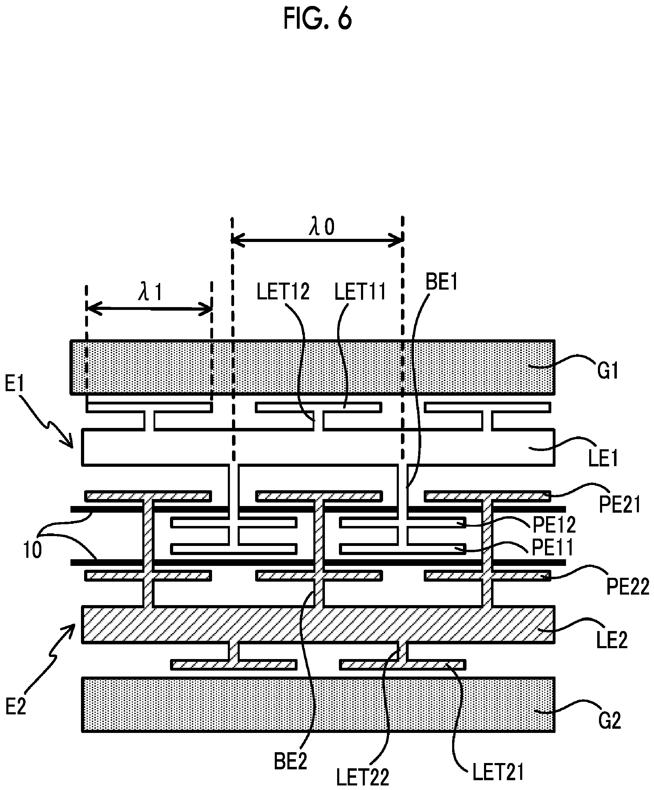

The present invention relates to, for example, as shown in FIG. 6, an optical waveguide device in which an optical waveguide including at least one Mach-Zehnder type optical waveguide is formed on a substrate, and two branched waveguides 10 configuring the Mach-Zehnder type optical waveguide are each provided with two modulation electrodes (E1, E2) for applying a differential modulation signal, wherein each of the modulation electrodes includes a plurality of proximity electrodes (PE11 to PE22) disposed in a divided manner along the branched waveguide, a signal electrode (LE1, LE2) for propagating the modulation signal, and a bypass electrode (BE1, BE2) connecting the proximity electrodes and the signal electrode, a ground electrode (G1, G2) is disposed to sandwich the two modulation electrodes (E1, E2), and capacitance adjustment mechanisms LET11 and LET 12 (LET21 and LET22) for adjusting the phase velocity of the modulation signal propagating through the modulation electrode are provided between the modulation electrode E1 (E2) and the ground electrode G1 (G2) which are adjacent to each other.

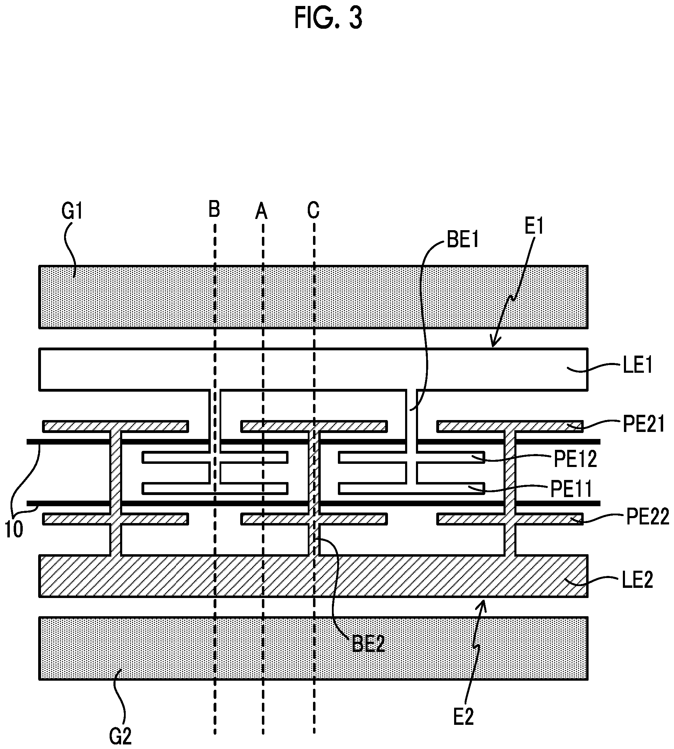

First, a structure of an optical waveguide device using segment electrodes will be described. FIG. 3 is a plan view showing a part of the optical waveguide device using the segment electrode of FIG. 2. Two modulation electrodes (E1, E2) are disposed for two branched waveguides 10 of a Mach-Zehnder type optical waveguide. Each modulation electrode is disposed with the proximity electrodes (PE11 to PE22) such that an electric field based on the modulation signal can always be applied to the two branched waveguides. In addition, ground electrodes (G1, G2) are disposed to sandwich the two modulation electrodes (E1, E2).

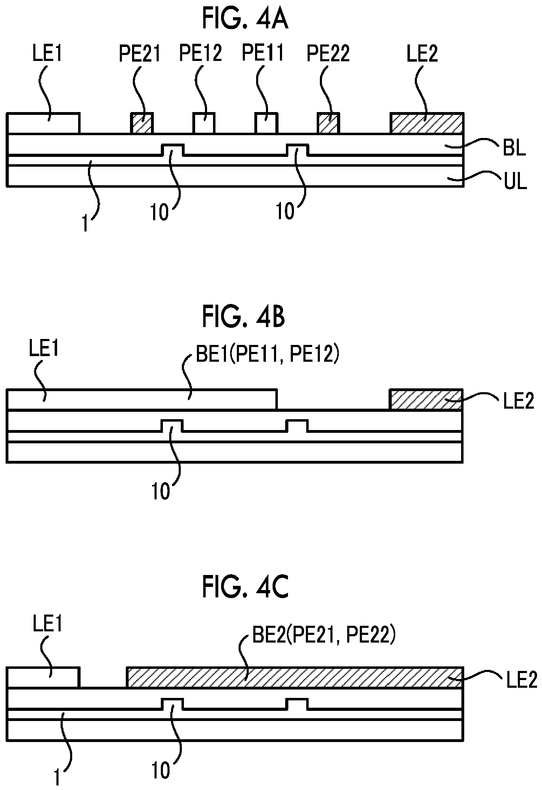

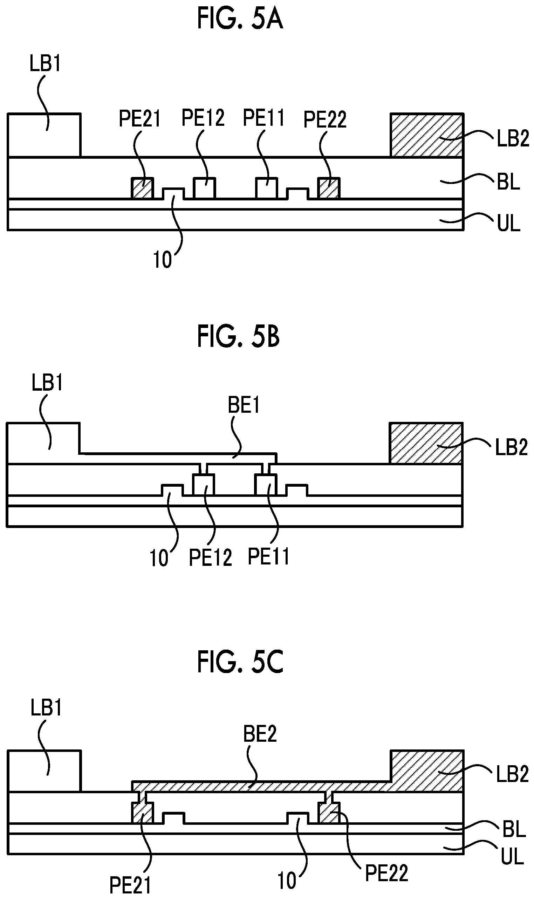

FIGS. 4A to 5C show a part of the cross-sections taken along the dotted lines A to C in FIG. 3. In FIGS. 4A to 5C, a lower layer UL, made of a material with a lower refractive index than the optical waveguide substrate 1, is provided on the lower surface side of the optical waveguide substrate 1, which is equipped with the rib-type optical waveguide 10. In a case where the lower layer UL has a holding substrate on the lower side, the lower layer UL may be referred to as an intermediate layer. In addition, a buffer layer BL made of a material having a lower refractive index than the optical waveguide substrate 1 is disposed on the upper surface side of the optical waveguide substrate 1.

In FIGS. 4A to 4C, the modulation electrodes (E1, E2) are disposed on the upper surface side of the buffer layer BL, and all the signal electrodes (LE1, LE2), bypass electrodes (BE1, BE2), and proximity electrodes (PE11 to PE22) configuring the modulation electrodes are located on the upper side of the buffer layer BL.

On the other hand, in FIGS. 5A to 5C, the proximity electrodes (PE11 to PE22) are disposed between the optical waveguide substrate 1 and the buffer layer BL and the electrodes are disposed closer to the optical waveguide 10, whereby efficiently applying the electric field to the optical waveguide. However, the signal electrodes (LE1, LE2) are disposed on the upper surface side of the buffer layer BL, and the bypass electrodes (BE1, BE2) penetrate the buffer layer BL to connect the signal electrodes and the proximity electrodes. Since the signal electrodes are disposed on the upper side of the optical waveguide substrate, and a part of the signal electrode may intersect with the optical waveguide 10, the signal electrodes are spaced apart from each other via the buffer layer BL in order to suppress absorption or scattering of the light wave propagating through the optical waveguide.

In the optical waveguide device of the present invention, unless otherwise specified, the arrangement of FIGS. 4A to 4C or FIGS. 5A to 5C can be selectively applied. The configuration of FIGS. 5A to 5C is more efficient in terms of applying the electric field as described above, but the manufacturing process is more complicated, so each configuration is appropriately selected while taking these factors into consideration.

As the optical waveguide substrate 1 used in the optical waveguide device of the present invention, a substrate having an electro-optic effect can be used. Specifically, single crystal materials such as lithium niobate (LN), lithium tantalate (LT), and lead lanthanum zirconate titanate (PLZT), or materials obtained by doping these substrate materials with MgO or the like can be used. In addition, these materials can be formed into films using a vapor-phase growth method such as a sputtering method, a vapor deposition method, or a CVD method. In addition, a substrate obtained by bonding the substrate having the electro-optic effect to another substrate and then processing the substrate having an electro-optic effect into a thin film can also be used. Furthermore, a semiconductor substrate, a substrate of an organic material such as EO polymer, and the like can also be used.

The optical waveguide 10 may be an optical waveguide in which a high refractive index material such as Ti is thermally diffused into the optical waveguide substrate 1, an optical waveguide formed by the proton exchange method, or even a rib-type optical waveguide 10 in which a portion of the substrate corresponding to the optical waveguide is formed in a convex shape as shown in FIGS. 4A to 4C or FIGS. 5A to 5C, by etching the substrate 1 other than the optical waveguide or by forming grooves on both sides of the optical waveguide. Furthermore, a refractive index can be further increased by diffusing Ti or the like on a surface of the substrate using a thermal diffusion method, a proton exchange method, or the like in accordance with the rib optical waveguide. The rib-type optical waveguide is an optical waveguide having a fine structure with a width or height of approximately 1 µm or less to increase confinement of light.

A thickness (maximum thickness) of the optical waveguide substrate 1 on which the optical waveguide 10 is formed is set to 10 µm or less, more preferably 5 µm or less, still more preferably 1 µm or less for velocity matching between the microwave of the modulation signal and the light wave. In addition, the height (height of the portion protruding from the slab waveguide) of the rib-type optical waveguide 10 is set to 80% or less of the maximum thickness of the optical waveguide substrate, and specifically, is set to 4 µm or less, more preferably 3 µm or less, and still more preferably 0.8 µm or less or 0.4 µm or less.

A lower layer is provided on the lower surface side of the optical waveguide substrate 1 on which the optical waveguide is formed. In order to increase the mechanical strength of the optical waveguide device, a holding substrate may be bonded to the lower side of the optical waveguide substrate 1. The optical waveguide substrate 1 and the holding substrate are bonded and fixed to each other by direct bonding or by an adhesive layer such as a resin. The holding substrate to be directly bonded preferably has, but is not limited to, a lower refractive index than the optical waveguide or than the substrate on which the optical waveguide is formed. In the case of direct bonding, an intermediate layer such as a metal oxide or a metal may be included in the bonding portion. In addition, as the holding substrate, a substrate including an oxide layer such as a SiO₂-based or Al₂O₃-based low dielectric constant substrate such as, for example, glass, quartz, fused quartz, synthetic quartz, eagle glass, alkali glass, non-alkali glass, lead glass, Pyrex glass, soda glass, sapphire, or alumina, which is a material having a thermal expansion coefficient close to the optical waveguide substrate 1, is suitably used. Furthermore, the same LN substrate as the optical waveguide substrate 1, or a composite substrate obtained by forming a silicon oxide layer on a silicon substrate and a composite substrate obtained by forming a silicon oxide layer on an LN substrate, which are abbreviated to SOI and LNOI, can also be used. In a case where the refractive index of the holding substrate is higher than the refractive index of the optical waveguide substrate 1, a layer (intermediate layer) having a lower refractive index than the refractive index of the optical waveguide substrate 1 is provided between the optical waveguide substrate 1 and the holding substrate.

For example, a glass-based substrate can be used as the holding substrate, and a bonding layer (intermediate layer) of SiO₂ can be provided on the upper surface of the holding substrate through an adhesive layer of Si, so that the optical waveguide substrate 1 can be disposed. In addition, the buffer layer BL is disposed on the upper side of the optical waveguide substrate 1.

In the optical waveguide device of the present invention, the buffer layer BL and the lower layer UL, which sandwich the optical waveguide substrate 1, function as clad layers for the optical waveguide 10, so that a dielectric material with a lower refractive index and higher transparency than the optical waveguide substrate 1 is used. Specifically, oxides or fluorides of metal elements in groups 1 to 17 of the periodic table, such as SiO₂, Al₂O₃, MgF₂, La₂O₃, ZnO, HfO₂, MgO, CaF₂, and Y₂O₃, are used.

A metal such as Au or Cu is used for the electrodes (E1, E2) disposed on the upper side of the optical waveguide substrate 1. In addition, in order to increase the adhesive strength between the electrodes and the optical waveguide substrate or the buffer layer on which the electrodes are disposed, the electrodes may be formed of a multilayer structure of an upper electrode and an underlayer. The upper electrode is formed to cover the underlayer by an electroplating method using the underlayer, an electroless plating method using a resist pattern, a vapor phase method such as vapor deposition or sputtering, or a combination thereof. As a material for the underlayer, Ti, Nb, Ni, Cr, or Al is used, and the underlayer is formed on the upper surface of the optical waveguide substrate by a sputtering method or a vapor deposition method.

The optical waveguide device of the present invention is characterized in that at least one of the two modulation electrodes (E1, E2) is provided with a capacitance adjustment mechanism for adjusting the phase velocity of the modulation signal propagating through the modulation electrode.

As described above, since the structures of the two modulation electrodes (E1, E2), which are lines for transmitting differential modulation signals, are asymmetric, there is a difference in capacitance between the modulation electrodes. Since the phase velocity of the high-frequency signal depends on the capacitance of the line (for example, an approximate solution of the propagation velocity v is represented by v = 1/(LC)^{1/2} , L is the inductance of the line, and C is the capacitance of the line), by partially adjusting the capacitance of the modulation electrode, it is possible to match the phase velocities of the differential modulation signals propagating through the two lines.

When the capacitance of the modulation electrode changes, the characteristic impedance of the line also changes. Therefore, the capacitance adjustment mechanism according to the present invention can also be used for characteristic impedance matching or propagation velocity matching between a light wave and a modulation signal. The characteristic impedance of the modulation electrode (signal electrode) is set to 80 to 120 S2, preferably 90 to 110 Ω, and more preferably 95 to 105 S2.

A specific configuration of the capacitance adjustment mechanism is not particularly limited as long as it is a configuration capable of adjusting the phase velocity of the modulation signal propagating through the electrode, and examples thereof include the following configurations.
(1) A dummy electrode that does not generate an electric field to be applied to the optical waveguide is provided. The dummy electrode is disposed between the modulation electrode and the ground electrode which are adjacent to each other, and the dummy electrode may be connected to either electrode.
(2) In addition, the clearance between the modulation electrode and the ground electrode which are adjacent to each other is partially adjusted.
(3) In addition, as another disposition position of the dummy electrode, the dummy electrode can be disposed to be connected to at least one of the proximity electrode, the bypass electrode, or the signal electrode.
(4) It is also possible to address this issue by changing the electrode width or the electrode thickness of at least a part of the proximity electrode, the bypass electrode, or the signal electrode.

Hereinafter, the above (1) and (2) will be described in detail. Of course, it goes without saying that a combination of (1) to (4) above can also be used.

Hereinafter, specific examples of the capacitance adjustment mechanism will be described with reference to FIGS. 6 to 21.

FIG. 6 is a plan view showing a first embodiment of an optical waveguide device of the present invention. More specifically, as the capacitance adjustment mechanism, dummy electrodes LET11 and LET12 (LET21 and LET22) are connected between the modulation electrode E1 (E2) and the ground electrode G1 (G2), more specifically, on the ground electrode G1 (G2) side of the signal electrodes LE1 (LE2) configuring the modulation electrode.

Although the "T"-shaped dummy electrode is illustrated in FIG. 6, as will be described below, the shape of the dummy electrode is not limited to this. In addition, the capacitance can be finely adjusted by changing the dimension of each part of the "T"-shaped dummy electrode.

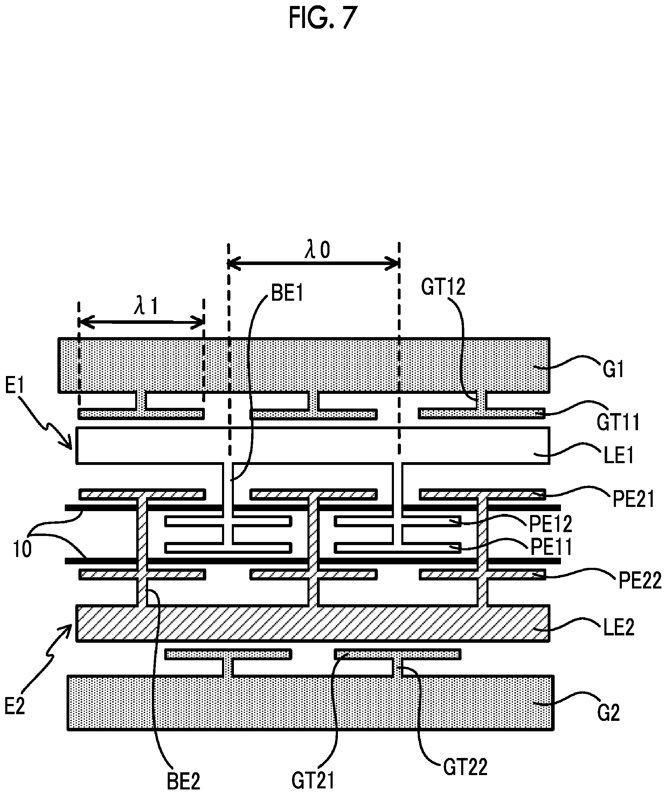

FIG. 7 is a second embodiment of the optical waveguide device according to the present invention, in which dummy electrodes GT11 and GT12 (GT21 and GT22) connected to the ground electrode G1 (G2) are provided between the modulation electrode E1 (E2) and the ground electrode G1 (G2).

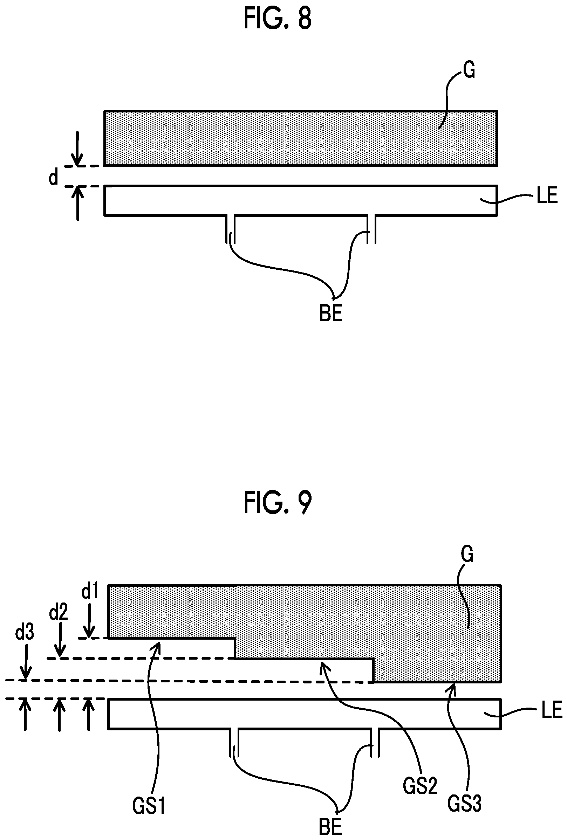

Further, as another example of the capacitance adjustment mechanism, the capacitance of the line can be changed by adjusting the clearance d between the signal electrode LE configuring the modulation electrode and the ground electrode G adjacent to the signal electrode LE, as shown in FIG. 8. A reference symbol BE denotes a bypass electrode configuring the segment electrode.

FIG. 9 shows an example in which the clearance between the signal electrode LE and the ground electrode G is changed in a stepwise manner. The clearances (d1 to d3) between the ground electrode and the signal electrode LE are changed at respective portions (GS1 to GS3) of the ground electrode. As the clearances (d1 to d3) increase, the generated capacitance decreases. By partially adjusting the clearance between the ground electrode and the signal electrode, the role of the capacitance adjustment mechanism can be fulfilled. It is also possible to change the length of each part (GS1 to GS3) of FIG. 9 along the signal electrode, and it is also possible to change the clearances continuously instead of stepwise.

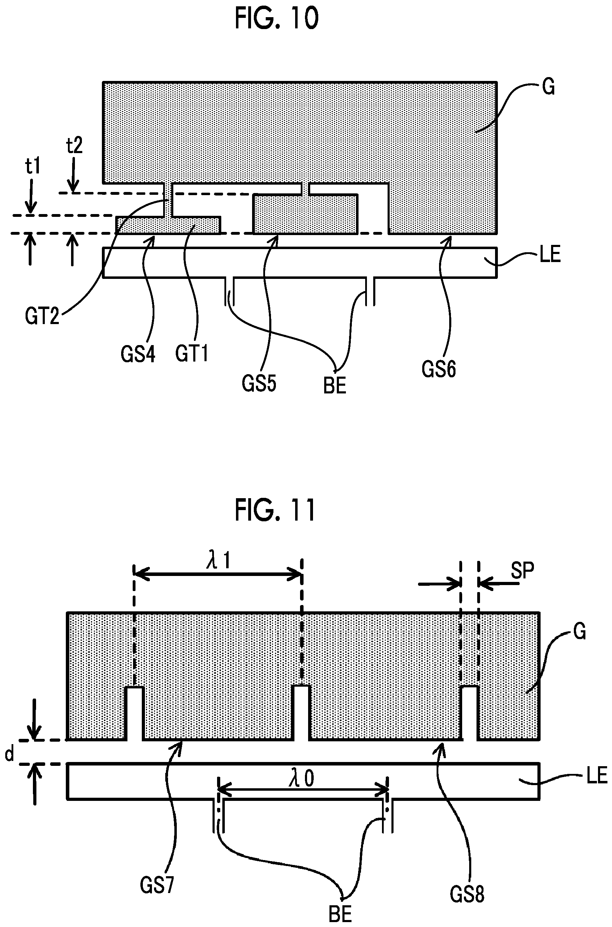

The influence of the shape change of the dummy electrodes (GS4 to GS6) provided on the ground electrode will be described with reference to FIG. 10. In each of the dummy electrodes (GS4 to GS6), the clearance between the ground electrode G and the signal electrode LE is the same. Therefore, the capacitance of the line formed by each dummy electrode is basically close to a certain value, but the capacitance is finely adjusted even when the thickness of the upper horizontal line portion GT1 of the "T"-shape forming the dummy electrode is changed. This is because the electric field profile formed between the signal electrode LE and the dummy electrode is changed depending on the thickness of the horizontal line portion GT1. However, when the thickness (t1, t2) is larger than the clearance between the signal electrode LE and the ground electrode G, the change in the electric field profile is almost eliminated, resulting in a state that is substantially the same as the dummy electrode GS6. Also, changing the thickness of the vertical line portion GT2 of the "T" shape also has some effect on the capacitance adjustment, but this influence is greater on the dummy electrodes formed on the signal electrode than on the ground electrode.

Next, the influence of changing the length λ1 along the signal electrode LE of the dummy electrodes (GS7 and GS8) will be described with reference to FIG. 11. In the optical waveguide device of the present invention, a plurality of segment electrodes are periodically disposed on the modulation electrode, so that a resonance phenomenon is likely to occur when a modulation signal is applied. Therefore, by configuring the clearance λ0 between the bypass electrodes BE, which is the disposition clearance between segment electrodes, and the length λ1 of the dummy electrodes (GS7 and GS8) such that the clearance X0 and the length λ1 do not match, it is possible to suppress the occurrence of this resonance phenomenon. The length λ1 may be n times the clearance λ0, or 1/n times the clearance λ0 (n is a natural number or a decimal number).

Regarding the length λ1 of the dummy electrode, as shown in FIGS. 6 and 7 in addition to FIG. 11, the same effect can be expected for the length λ1 of the horizontal line portions (LET11, GT11) of the "T"-shaped dummy electrode.

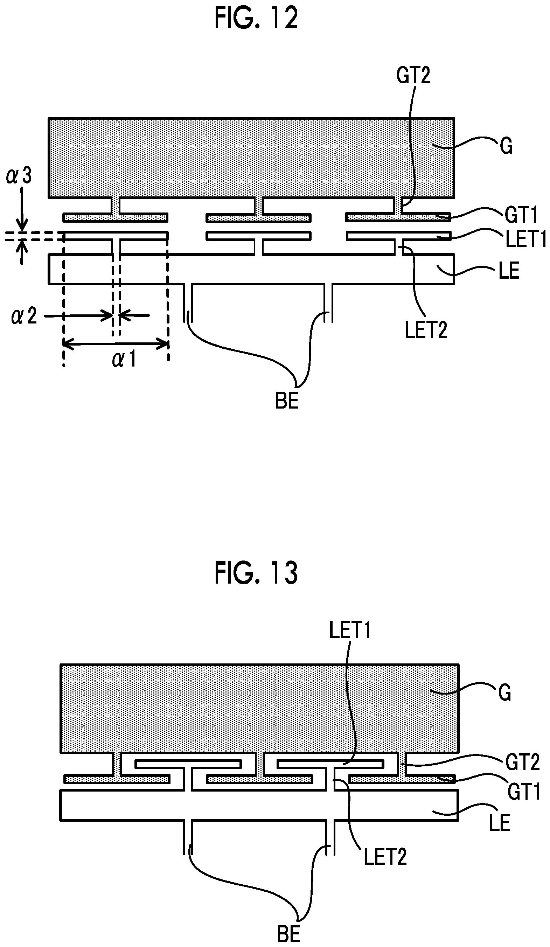

FIG. 12 is a diagram illustrating an example in which dummy electrodes are provided on both the modulation electrode and the ground electrode. By disposing the dummy electrodes (LET1 and LET2, GT1 and GT2) to face each other, it is possible to more finely adjust the capacitance of the line of the modulation electrode. Specifically, the length α1 or the width α3 of the "T"-shaped horizontal line portion (LET1, GT1) of each dummy electrode and the width α2 of the vertical line portion (LET2, GT2) are adjusted. The shape of the opposing dummy electrodes does not need to be symmetrical, and the shape is not limited to a "T" shape. In addition, one dummy electrode may have a "T" shape, while the other dummy electrode may have a different shape.

FIG. 12 illustrates an example of a case in which the dummy electrode includes a dummy electrode (first dummy electrode) provided on the modulation electrode and a dummy electrode (second dummy electrode) provided on the ground electrode, and a distance from the signal electrode to a portion of the first dummy electrode that is farthest from the signal electrode LE is shorter than a distance from the signal electrode to a portion of the second dummy electrode that is closest to the signal electrode.

Hereinafter, a case will be described in which in the dummy electrode, a distance from the signal electrode to a portion of the first dummy electrode that is farthest from the signal electrode is longer than a distance from the signal electrode to a portion of the second dummy electrode that is closest to the signal electrode (so-called, a state in which the dummy electrodes are intertwined).

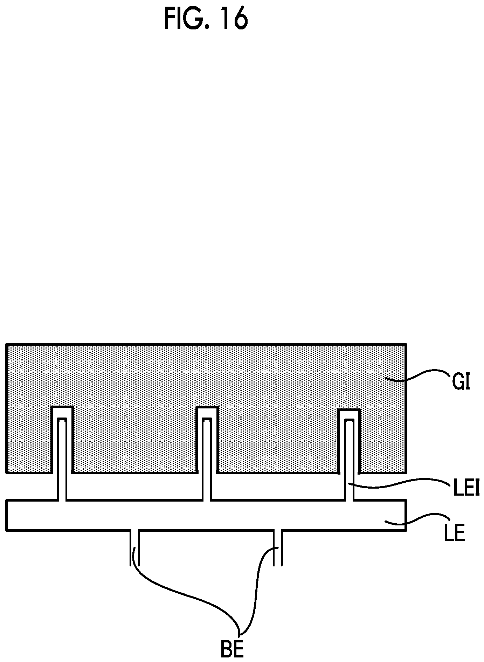

FIGS. 13 to 15 show a state in which the dummy electrodes are intertwined, and FIG. 16 shows a state in which the dummy electrode is incorporated into the ground electrode. The shapes and arrangements of the dummy electrodes in FIGS. 13 to 16 contribute to further enhancing the function of adjusting the capacitance of the dummy electrodes. The capacity can be more finely adjusted by surrounding a part of the dummy electrode formed on the signal electrode with the ground electrode itself or the dummy electrode formed on the ground electrode. Specifically, in FIG. 12, only a part of the dummy electrode, for example, the periphery close to the ground electrode in the T-shaped horizontal line portion, contributes to the capacitance adjustment. On the other hand, in FIGS. 13 to 16, the entire portion surrounded by the ground electrode contributes to the adjustment of the capacitance. Therefore, the shape of the dummy electrode and the clearance from the surrounding ground electrode (dummy electrode connected to the ground electrode) affect the capacitance adjustment, making it possible to perform more fine capacitance adjustment.

In FIG. 13, a "T" shape is selected as the shape of the dummy electrode, and the dummy electrodes (LET1 and LET2) of the modulation electrode and the dummy electrodes (GT1 and GT2) of the ground electrodes are intertwined and disposed.

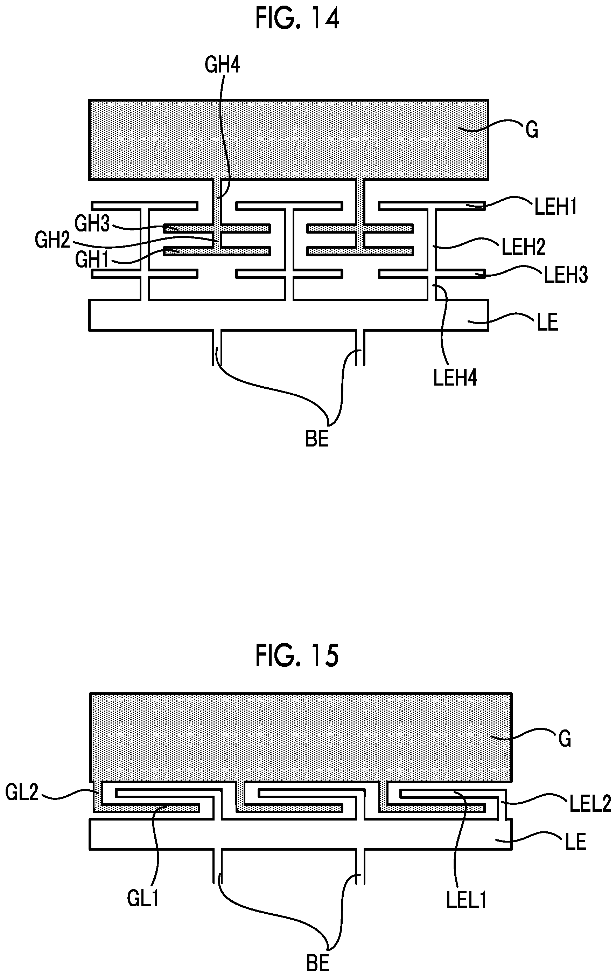

In FIG. 14, a substantially "H"-shaped form is adopted as the dummy electrode, and the respective dummy electrodes (LEH1 to LEH4, GH1 to GH4) are intertwined with each other in the same manner as in FIG. 13.

In addition, in FIG. 15, the "L"-shaped dummy electrodes (LEL1 and LEL2, GL1 and GL2) are intertwined and disposed.

FIG. 16 shows an example in which the dummy electrode LEI of the modulation electrode is surrounded by the ground electrode body. Although the dummy electrode is in an "I" shape, the shape of the dummy electrode is not limited to this and may be in a "T" shape, a substantially "H" shape, or an "L" shape.

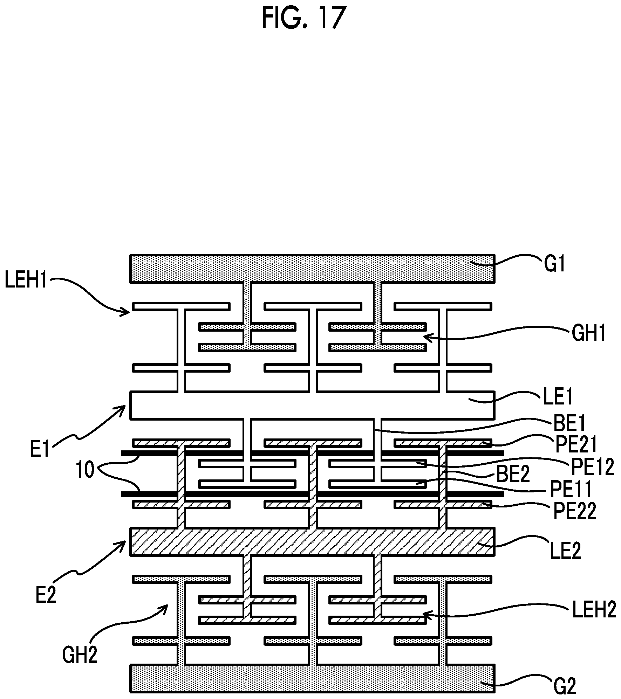

As shown in FIG. 17, a plurality of dummy electrodes (LEH1 and LEH2, GH1 and GH2) are added between the modulation electrodes E1 (E2) and the ground electrodes G1 (G2), and the electrodes are configured such that the shapes of the electrodes are substantially the same in the two modulation electrodes as viewed in the entire electrodes, thereby making the capacitance of each line the same and adjusting the phase velocity. In addition, by improving the symmetry of the shapes of the two modulation electrodes, the distribution of internal stress that the electrodes exert on the optical waveguide substrate due to thermal expansion or the like becomes uniform, which also contributes to suppressing the occurrence of the temperature drift phenomenon.

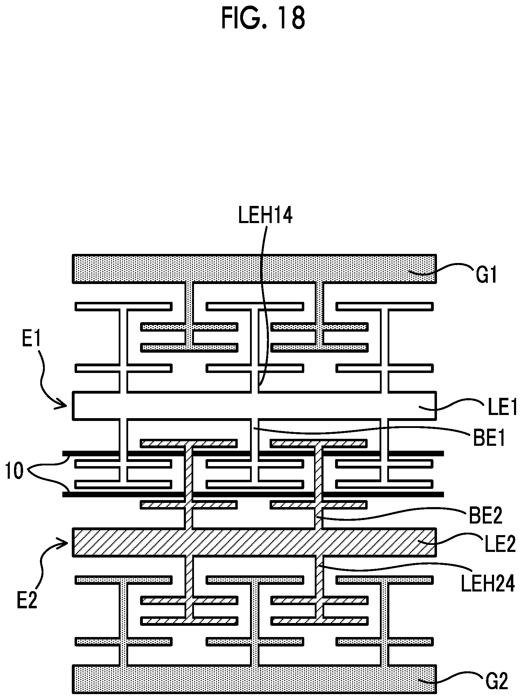

In addition, in FIG. 18, the formation position of the dummy electrode LEH14 (LEH24) is provided in accordance with the position of the bypass electrode BE1 (BE2). Thus, the symmetry of the two modulation electrodes is further enhanced.

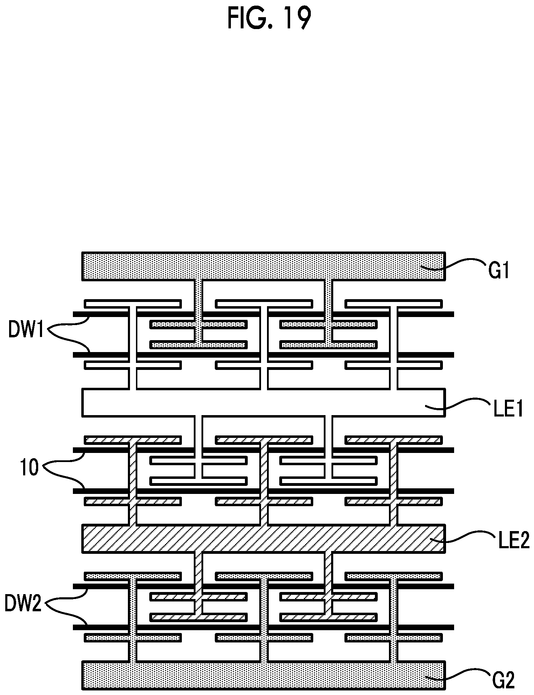

In addition, as shown in FIG. 19, it is also possible to dispose a dummy optical waveguides DW1 and DW2 that are adjacent to the optical waveguide (branched waveguide) 10 and does not propagate the light wave, in addition to the optical waveguide (branched waveguide) 10 that propagates the light wave. The presence of the dummy optical waveguides DW1 and DW2 further improves the symmetry of the shapes of the two modulation electrodes, and the distribution of internal stress that the electrodes exert on the optical waveguide substrate due to thermal expansion or the like becomes more uniform.

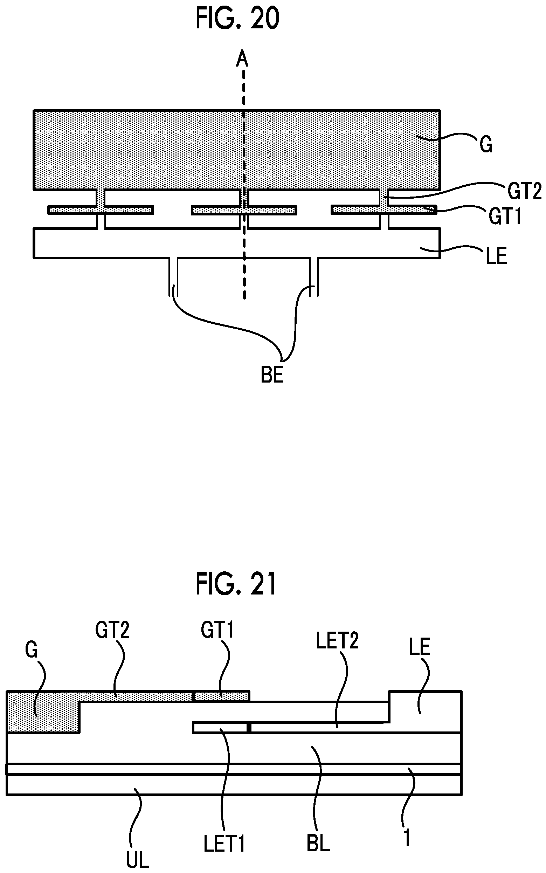

FIGS. 20 and 21 illustrate a method in which two dummy electrodes are stacked with a buffer layer interposed therebetween. This method has a higher capacitance adjustment function than a method in which two dummy electrodes are disposed side by side on the same surface. FIG. 21 shows a cross-sectional view at the dotted line A shown in FIG. 20, where the horizontal line portions LET1 and GT1 of the "T"-shaped dummy electrodes are disposed to overlap each other in the thickness direction of the substrate 1.

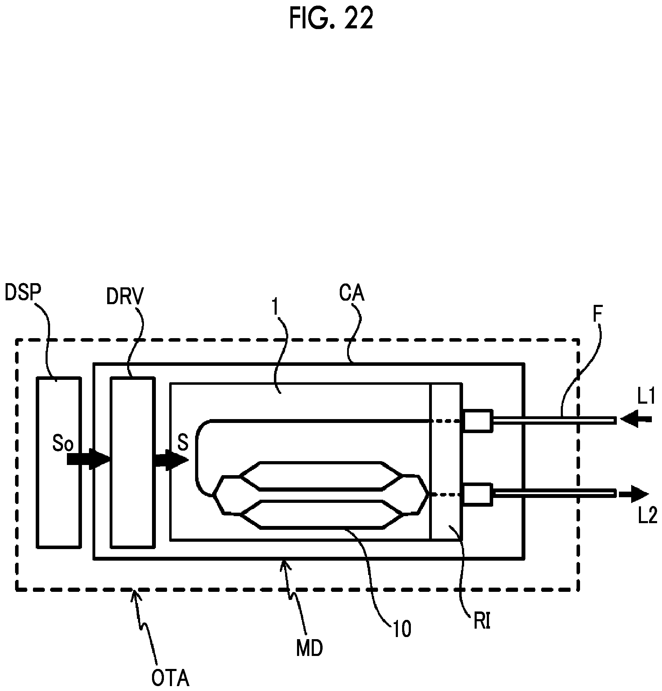

FIG. 22 is a diagram illustrating an example of an optical transmission apparatus. In recent years, an optical modulation device such as a high bandwidth-coherent driver modulator (HB-CDM) in which a driver IC and the optical waveguide device and the like are integrated in the same case has drawn attention, and there has been an increasing need for a configuration suitable for size reduction and the like, such as the optical waveguide device of the present invention.

In an optical modulation device of the present invention, the optical waveguide device is disposed inside a case CA of metal or the like. In the optical waveguide device inside the case, the input light L1 is input into an optical waveguide 10 formed on the optical waveguide device through an optical fiber FB or other optical components such as a lens. Meanwhile, the light wave output from the optical waveguide device is input into another optical fiber F and results in the output light L2. In outputting light, an optical component such as polarization combining means or a lens is used, as necessary. A modulation electrode, not illustrated, is formed on the substrate 1 of the optical waveguide device. In addition, a reinforcing member RI for increasing mechanical strength is disposed on the substrate in input and output portions of the optical waveguide device, as necessary.

In the optical modulation device, a driver circuit element DRV that generates an electrical signal S to be applied to the modulation electrode of the optical waveguide device is disposed adjacent to the optical waveguide device, and the optical waveguide device and the driver circuit element DRV are accommodated inside the same case CA.

Furthermore, an optical transmission apparatus can also be configured by providing a signal generator DSP (digital signal processing device) that generates a modulation signal So to be input into the driver circuit element DRV. The case CA and the signal generator DSP can also be incorporated in one chassis.

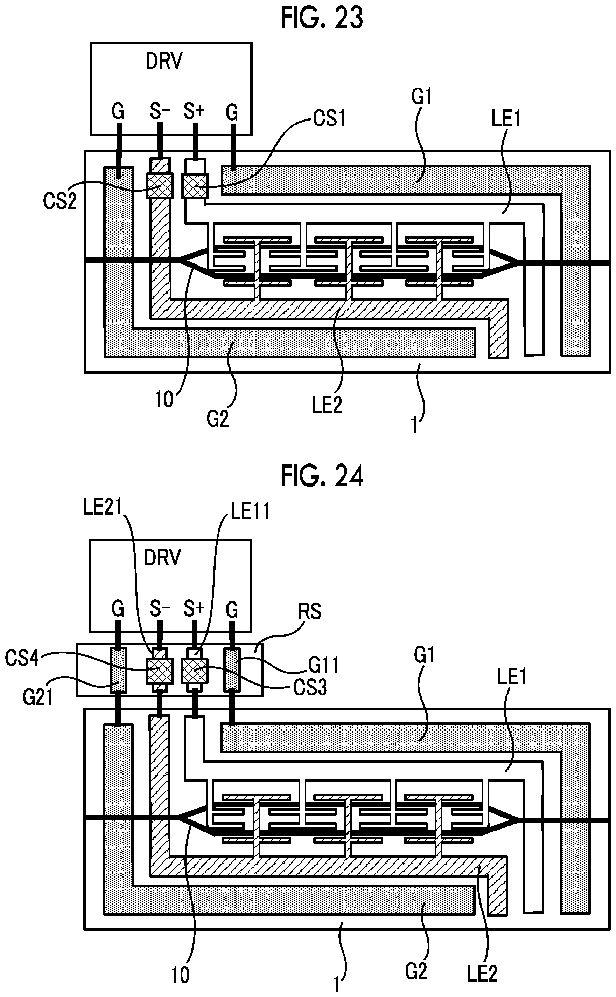

In addition, as shown in FIGS. 23 and 24, a capacitor may be provided on a part of the signal electrode of the modulation electrode or in a part of the signal line for supplying the modulation signal of the modulation electrode to block a DC component included in the modulation signal. In FIG. 23, the capacitor CS1 (CS2) is disposed on the input side of the modulation signal (differential modulation signal S+, S-) of the signal electrode LE1 (LE2). In addition, in FIG. 24, capacitors (CS3, CS4) are disposed in the signal lines (LE11, LE21) provided on the relay substrate RS to supply the modulation signal to the signal electrode. Reference symbols G1 1 and G21 denote lines for the ground electrodes provided on the relay substrate.

As described above, according to the present invention, it is possible to provide an optical waveguide device in which the phase shift of a differential modulation signal propagating through an electrode is suppressed. Furthermore, it is possible to provide an optical modulation device and an optical transmission apparatus using the optical waveguide device.

## Claims

1. An optical waveguide device in which an optical waveguide including at least one Mach-Zehnder type optical waveguide is formed on a substrate, and
two modulation electrodes are provided to apply a differential modulation signal to each of two branched waveguides configuring the Mach-Zehnder type optical waveguide, wherein
each of the modulation electrodes includes a plurality of proximity electrodes disposed in a divided manner along the branched waveguide, a signal electrode for propagating the modulation signal, and a bypass electrode connecting the proximity electrodes and the signal electrode, and
a ground electrode is disposed to sandwich the two modulation electrodes, and a capacitance adjustment mechanism for adjusting a phase velocity of the modulation signal propagating through the modulation electrode is provided between the modulation electrode and the ground electrode which are adjacent to each other.

2. The optical waveguide device according to claim 1, wherein
the capacitance adjustment mechanism is a dummy electrode that is formed on a part of the modulation electrode or the ground electrode and does not generate an electric field to be applied to the branched waveguide.

3. The optical waveguide device according to claim 2, wherein
the dummy electrode includes a first dummy electrode provided on the modulation electrode and a second dummy electrode provided on the ground electrode, and a distance from the signal electrode to a portion of the first dummy electrode that is farthest from the signal electrode is longer than a distance from the signal electrode to a portion of the second dummy electrode that is closest to the signal electrode.

4. The optical waveguide device according to claim 2, wherein
the dummy electrode includes a first dummy electrode provided on the modulation electrode and a second dummy electrode provided on the ground electrode, and a distance from the signal electrode to a portion of the first dummy electrode that is farthest from the signal electrode is shorter than a distance from the signal electrode to a portion of the second dummy electrode that is closest to the signal electrode.

5. The optical waveguide device according to claim 2, wherein
the dummy electrode is a first dummy electrode provided on the modulation electrode, and the ground electrode has a shape surrounding a part of the first dummy electrode.

6. The optical waveguide device according to claim 2, wherein
a length λ1 of the dummy electrode along the signal electrode and a clearance λ0 between adjacent bypass electrodes are different from each other.

7. The optical waveguide device according to claim 1, wherein
the capacitance adjustment mechanism has a configuration for adjusting a clearance between the modulation electrode and the ground electrode which are adjacent to each other.

8. The optical waveguide device according to claim 1, wherein
a buffer layer is formed on the substrate, the proximity electrode is disposed between the substrate and the buffer layer, and the signal electrode and a part of the bypass electrode is disposed on the buffer layer.

9. The optical waveguide device according to claim 1, wherein
a dummy optical waveguide that does not propagate a light wave is disposed between the modulation electrode and the ground electrode which are adjacent to each other.

10. The optical waveguide device according to claim 1, wherein
a capacitor that blocks a DC component of the modulation signal is formed in a part of the modulation electrode or in a part of a signal line electrically connected to the modulation electrode.

11. An optical modulation device comprising:
the optical waveguide device according to claim 1 being accommodated in a case; and
an optical fiber through which a light wave is input into the optical waveguide or output from the optical waveguide.

12. The optical modulation device according to claim 11,
wherein the optical waveguide device includes a modulation electrode for modulating the light wave propagating through the optical waveguide, and
an electronic circuit that amplifies a modulation signal to be input to the modulation electrode of the optical waveguide device is provided inside the case.

13. An optical transmission apparatus comprising:
the optical modulation device according to claim 11; and
an electronic circuit that outputs a modulation signal causing the optical modulation device to perform a modulation operation.
